(19) Europäisches Patentamt / European Patent Office / Office européen des brevets

(11) **EP 3 189 577 B1**

(12) **FASCICULE DE BREVET EUROPEEN**

(45) Date de publication et mention
de la délivrance du brevet:
**06.11.2019 Bulletin 2019/45**

(21) Numéro de dépôt: **15766924.3**

(22) Date de dépôt: **04.09.2015**

(51) Int Cl.:
*H02J 3/28* *(2006.01)*  *H02S 50/00* *(2014.01)*
*H02J 7/35* *(2006.01)*  *H02S 40/38* *(2014.01)*
*H02J 7/00* *(2006.01)*  *H02J 3/38* *(2006.01)*

(86) Numéro de dépôt international:
**PCT/FR2015/052359**

(87) Numéro de publication internationale:
**WO 2016/034831 (10.03.2016 Gazette 2016/10)**

(54) **GESTION AMÉLIORÉE D'UNE INSTALLATION DE PRODUCTION D'ÉNERGIE ÉLECTRIQUE**

VERBESSERTE VERWALTUNG EINER STROMERZEUGUNGSANLAGE

IMPROVED MANAGEMENT OF AN ELECTRICAL POWER GENERATION FACILITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.09.2014 FR 1458361**

(43) Date de publication de la demande:
**12.07.2017 Bulletin 2017/28**

(73) Titulaire: **Electricité de France
75008 Paris (FR)**

(72) Inventeurs:
• **ALZIEU, Jean
F-75011 Paris (FR)**
• **SCHWEITZ, Guy
F-77940 Blennes (FR)**
• **THEURET, Patrick
F-75015 Paris (FR)**

(74) Mandataire: **Plasseraud IP
66, rue de la Chaussée d'Antin
75440 Paris Cedex 09 (FR)**

(56) Documents cités:
**WO-A1-2013/128731**

EP 3 189 577 B1

**Description**

L'invention porte sur un procédé de gestion d'une installation de production d'énergie électrique comprenant un dispositif de stockage d'énergie électrique. WO 2013/128731 traite d'un tel sujet.

Dans ce type d'installations, le dispositif de stockage est utilisé pour stocker de l'énergie électrique produite par un dispositif de production que comprend l'installation, par exemple lorsque l'énergie produite est supérieure à l'énergie consommée par un équipement connecté en sortie de l'installation. A l'inverse, l'énergie emmagasinée dans le dispositif de stockage est fournie à l'équipement de sortie en complément de l'énergie produite lorsque cette dernière ne suffit pas à alimenter l'équipement.

Afin d'éviter certains phénomènes de dégradation du dispositif de stockage et de diminution de sa durée de vie se produisant du fait de conditions d'utilisation échappant à son enveloppe de fonctionnement optimale, il est préférable de piloter de façon précise la charge et la décharge de ce dispositif.

Dans ce contexte, il est notamment connu de réguler la charge et la décharge du dispositif de stockage en fonction de la tension qu'il présente et qui fournit une information sur la quantité d'énergie électrique qu'il contient. Cette quantité est alors rendu visualisable par un dispositif d'affichage à couleurs correspondant chacune à une plage de quantités d'énergie disponibles, telles que par exemple une couleur verte pour un niveau d'énergie haut, une couleur orange pour un niveau moyen et une couleur rouge pour un niveau faible.

Cette pratique présente un problème majeur : les courants de décharge généralement pratiqués ne permettent pas de réaliser une transition entre le niveau haut et le niveau moyen avant un pourcentage de décharge compris entre 60% et 80%, ce qui se traduit par une absence de visibilité dans la zone de décharge 15%-50% correspondant à une journée d'autonomie, sachant que cette autonomie est généralement comprise entre 2 jours et une semaine. Ainsi, 15% de décharge correspond à une journée d'autonomie lorsque le dispositif de stockage présente une autonomie de 7 jours, et 50% correspond à cette décharge lorsque le dispositif de stockage dispose d'une autonomie de 2 jours.

Afin d'améliorer la situation, il est connu de mettre ces mesures de tension en regard de mesures du courant de décharge. En effet, pour un état de charge donné, plus le courant de décharge est important, plus la tension mesurée est faible. Toutefois, ces grandeurs, et en particulier la tension, sont impactées par des facteurs extérieurs tels que la température. Afin de rendre compte de ces effets difficiles à modéliser, les constructeurs enregistrent des séries d'abaques. A leur tour, ces abaques correspondent à des situations figées qui peuvent diverger substantiellement de situations concrètes, notamment du fait d'effets transitoires. En outre, le comportement du dispositif de stockage évolue avec son âge, ce dont ces abaques ne rendent pas compte.

Pour remédier à ces problèmes, il est connu de décompter les ampères-heures entrant et sortant du dispositif de stockage et de rapporter ces ampères-heures à la capacité du dispositif de stockage. Toutefois, cette méthode présente une incertitude en raison du caractère peu prédictible des variations du rendement en courant lors des réactions de charge et décharge. Par suite, cela donne lieu à des dérives importantes de l'état de charge évalué tant que l'état de charge demeure dans la zone aveugle des mesures de tension. Un réajustement doit alors être opéré lorsque l'état de charge sort de cette zone. Toutefois, les dérives se produisant peuvent être telles que des réajustements de plusieurs dizaines de pourcents de l'état de charge du dispositif de stockage peuvent être nécessaires, ce qui est incompatible avec une évaluation et un pilotage fin de la charge et de la décharge du dispositif de stockage et un fonctionnement de ce dernier au sein de son enveloppe optimale.

L'invention vise à améliorer la situation.

A cet effet, l'invention porte sur un procédé de gestion d'une installation de production d'énergie électrique comprenant :

- un dispositif de production d'énergie électrique,
- un dispositif de stockage d'énergie électrique adapté pour stocker l'énergie électrique produite par le dispositif de production d'énergie électrique et pour fournir de l'énergie électrique à un équipement connecté en sortie de ladite installation,
- un module de commande configuré pour piloter la charge et la décharge du dispositif de stockage.

En particulier, le procédé comprend les étapes de :

- évaluer une capacité de production de quantité d'électricité du dispositif de production pour une période donnée,
- déterminer une capacité de production pondérée à partir de ladite capacité de production de quantité d'électricité évaluée et d'au moins une capacité de production de quantité d'électricité dudit dispositif de production évaluée sur une période précédant ladite période donnée,
- déterminer, pour une période postérieure à la période donnée, une limite de décharge du dispositif de stockage en fonction de ladite capacité de production pondérée, et
- au cours de la période postérieure, limiter la quantité d'électricité fournie à l'équipement connecté en sortie en fonction de la limite de décharge.

Ainsi, on obtient une limite de décharge qui rend compte de façon précise d'une quantité d'électricité qu'il est préférable de ne pas dépasser afin de ne pas sortir des conditions d'utilisation optimales du dispositif de stockage. Ceci permet de prévenir les effets indésirables de diminution rapide de la capacité de stockage que le dispositif de stockage présente et ainsi son vieillissement prématuré. De fait, la durée de vie du dispositif de stockage est améliorée. Par ailleurs, cette limite de décharge est évaluée de façon simple et par seul recours à des informations accessibles au sein du dispositif de stockage. En particulier, cette limite de décharge ne repose pas sur d'éventuelles considérations prédictives construites à partir d'informations extérieures à l'installation, ce qui imposerait la connexion de l'installation à un centre de communication distant. Ceci serait particulièrement désavantageux pour des installations de faible taille, telles que par exemple des installations couplées à une habitation et non raccordées à un réseau d'alimentation, telles que des installations SHS (« Solar Home System », pour système photovoltaïque pour habitation) et des installations dites EnR, pour « Energie Renouvelable ». En outre, on limite la décharge du dispositif de stockage, ce qui limite les risques d'un fonctionnement de celui-ci en dehors de son enveloppe optimale, et ce quelle que soit la consommation de l'équipement connecté en sortie.

Selon un aspect de l'invention, au cours de la période postérieure, on limite la quantité d'électricité fournie à l'équipement connecté en sortie à la valeur de la limite de décharge déterminée pour cette période postérieure.

Selon un aspect de l'invention, au cours de la période postérieure, on limite la quantité d'électricité fournie à l'équipement connecté en sortie à la somme de la limite de décharge déterminée pour cette période postérieure et d'une grandeur représentative de la différence entre la limite de décharge lors d'au moins une période antérieure à ladite période postérieure et la quantité d'électricité fournie à l'équipement connecté en sortie à l'issue de cette période antérieure.

Selon un aspect de l'invention, lors de ladite période postérieure, on commande l'affichage à un dispositif d'affichage d'une quantité d'électricité restante pour la période postérieure, ladite quantité d'électricité restante étant déterminée à partir de la différence entre ladite limite de décharge et la quantité d'électricité fournie à l'équipement connecté en sortie de l'installation au cours de la période postérieure. Ceci permet à l'utilisateur de l'installation d'ajuster sa consommation en fonction de la limite de décharge et d'ainsi prévenir des conditions de fonctionnement conduisant à des dégradations des propriétés du dispositif de stockage.

Dans une réalisation, la période donnée comprend au moins une première période au cours de laquelle le module de commande fonctionne selon un premier mode de fonctionnement dans lequel le module de commande n'applique pas de consigne de régulation adaptée pour réguler l'énergie électrique produite par le dispositif de production et fournie au dispositif de stockage, et au moins une deuxième période au cours de laquelle le module de commande fonctionne selon un deuxième mode de fonctionnement dans lequel le module de commande applique au moins une consigne de régulation de charge.

Dans un mode de réalisation, on évalue la capacité de production de quantité d'électricité de la période donnée à partir :

- du courant fourni par le dispositif de production lors d'au moins une première période et de la durée de l'au moins une première période, et
- de la durée d'au moins une deuxième période et, pour chaque deuxième période considérée, du courant fourni par le dispositif de production lors d'une troisième période consécutive à ladite deuxième période considérée et au cours de laquelle le module de commande fonctionne selon le premier mode de charge.

Ainsi, on peut mesurer la capacité de production du dispositif de stockage de façon précise tout en impactant de façon minimale la charge du dispositif de stockage et la régulation de charge appliquée.

Avantageusement, la durée d'une troisième période est comprise entre $10^{-3}$ et 10 secondes. Ces valeurs permettent d'obtenir une mesure de la capacité de production plus fine du fait que les mesures ne sont pas entachées par des erreurs liées à des phénomènes transitoires se produisant lorsque la régulation de charge est interrompue.

Selon un autre aspect de l'invention, la capacité de production pondérée pour la période donnée est déterminée à partir de la relation :

$$Cp(t) = \sum_{i=0}^{k} a_i(t) C(t-i)$$

où *Cp* désigne la capacité de production pondérée, *t* désigne la période donnée, *t-i* désigne une période antérieure à la période donnée, *C(t-i)* désigne la capacité de production au cours de la période t-i, k désigne un nombre non nul de périodes incluant la période t dont la capacité de production du dispositif de production est prise en compte pour l'évaluation de la capacité de production pondérée de la période donnée et $a_i(t)$ désigne un facteur de pondération de la capacité de production $C(t-i)$ de la période t-i.

Selon un autre aspect de l'invention, la capacité pondérée est évaluée à partir de la relation:

$$Cp(t) = a(t) * C(t) + (1 - a(t)) * Cp(t - 1),$$

où a(t) est un facteur compris entre 0 et 1.

Selon un aspect de l'invention, la limite de décharge de la période postérieure est déterminée comme inférieure ou égale au rapport $Cp(t)/c(t)$, où $t$ désigne la période donnée, Cp(t) est la capacité de production pondérée de la période donnée (t) et $c(t)$ est un coefficient de charge du dispositif de stockage pour la période donnée (t).

Dans un mode de réalisation, la limite de décharge est déterminée à partir de la relation :

$$LimDech(t + 1) = Cp(t)/(c(t) * s(t)),$$

où *LimDech* est la limite de décharge, t+1 désigne la période postérieure à la période donnée et *s(t)* est un coefficient de sécurité pour la période donnée qui est supérieur ou égal à 1.

L'invention concerne également un programme informatique comportant des instructions pour la mise en œuvre du procédé défini ci-dessus, lorsque ce programme est exécuté par un processeur.

En outre, l'invention concerne un module de commande pour installation de production d'énergie électrique, ladite installation de production d'énergie électrique comprenant :

- un dispositif de production d'énergie électrique,
- un dispositif de stockage d'énergie électrique adapté pour stocker l'énergie électrique produite par le dispositif de production d'énergie électrique et pour fournir de l'énergie électrique à un équipement connecté en sortie de ladite installation,
- le module de commande étant configuré pour piloter la charge et la décharge du dispositif de stockage,

le module de commande étant en outre configuré pour:

- évaluer une capacité de production de quantité d'électricité du dispositif de production pour une période donnée,
- déterminer une capacité de production pondérée à partir de ladite capacité de production évaluée et d'au moins une capacité de production de quantité d'électricité évaluée sur une période précédant ladite période donnée,
- déterminer, pour une période postérieure à la période donnée, une limite de décharge du dispositif de stockage en fonction de ladite capacité de production pondérée, et
- limiter, au cours de la période postérieure, la quantité d'électricité fournie à l'équipement connecté en sortie en fonction de la limite de décharge.

Par ailleurs, l'invention concerne une installation de production d'énergie électrique, ladite installation de production d'énergie électrique comprenant :

- un dispositif de production d'énergie électrique,
- un dispositif de stockage d'énergie électrique adapté pour stocker l'énergie électrique produite par le dispositif de production d'énergie électrique et pour fournir de l'énergie électrique à un équipement connecté en sortie de ladite installation,

l'installation comprenant un module de commande tel que défini ci-dessus.

Dans un mode de réalisation, le dispositif de production comprend un ou plusieurs panneaux photovoltaïques. En effet, l'invention est particulièrement adaptée à ce type de dispositifs dans la mesure où la variabilité de la capacité de production de ces dispositifs est importante comparativement à d'autres types de dispositifs de production.

Selon un autre aspect de l'invention, le dispositif de stockage comprend une ou plusieurs batteries au plomb. Ceci est particulièrement avantageux dans la mesure où ce type de batteries présente une forte susceptibilité à des états de décharge persistants, qui causent alors un phénomène de sulfatation dure des électrodes, c'est-à-dire une perte progressive de réactivité du sulfate de plomb produit par la réaction de décharge. Ces états de décharge prolongée sont également responsables de phénomènes de stratification de l'électrolyte de la batterie, essentiellement dans le cas de batteries ouvertes, par lesquels l'électrolyte présente une concentration en acide sulfurique spatialement hétérogène. En particulier, les concentrations sont plus fortes en partie basse des électrodes, ce qui conduit à une décharge sélective de ces parties basses et à un vieillissement prématuré des parties correspondantes des électrodes.

L'invention sera mieux comprise à la lecture de la description détaillée qui va suivre, donnée uniquement à titre d'exemple et faite en référence aux Figures annexées, sur lesquelles :

- la Figure 1 est une illustration schématique d'une installation de production d'énergie électrique selon l'invention ;
- la Figure 2 est une illustration schématique de périodes de l'installation de production d'énergie électrique de la Figure 1 ; et
- la Figure 3 est une illustration schématique d'un procédé de gestion d'une installation de production d'énergie électrique selon l'invention.

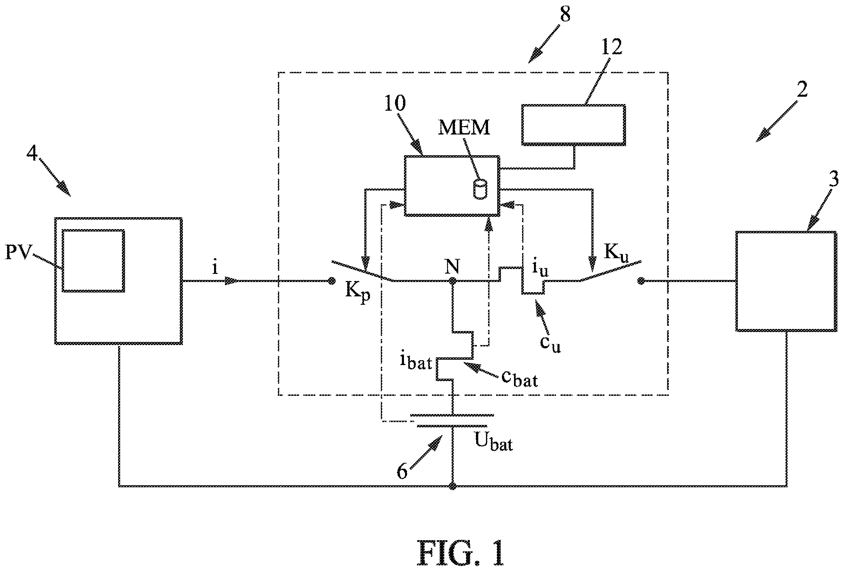

La Figure 1 illustre une installation de production d'énergie électrique 2 selon l'invention, ci-après installation 2, adaptée pour fournir de l'énergie électrique à un ou plusieurs équipements 3. Ces équipements 3 correspondent par exemple à des équipements électriques d'une habitation, comme des équipements de chauffage, des équipements d'éclairage, des appareils électroménagers, etc.

L'installation 2 comprend un dispositif de production d'énergie électrique 4, ou dispositif de production 4, un dispositif de stockage d'énergie électrique 6, ou dispositif de stockage 6, et un module de gestion 8 configuré pour piloter la charge et la décharge du dispositif de stockage 6 ainsi que l'alimentation des équipements 3 en énergie électrique.

Préférentiellement, l'installation 2 est une installation de production d'énergie électrique renouvelable, ou EnR. Plus précisément, préférentiellement, l'installation 2 est une installation photovoltaïque. Dans les modes de réalisation correspondants tels celui de la Figure 1, le dispositif de production 4 comprend un ou plusieurs panneaux photovoltaïques PV. Dans certains modes de réalisation, le dispositif de production 4 ne comprend que des panneaux photovoltaïques. En outre, dans certains modes de réalisation tels celui de la Figure 1, l'installation de production 2 n'est pas raccordée à un réseau d'alimentation.

Le dispositif de production 4 est connecté au module de gestion 8 et lui fournit un courant i.

Le dispositif de stockage 6 est adapté pour stocker de l'énergie électrique en provenance du dispositif de production 4 et pour restituer cette énergie électrique aux équipements 3. Le dispositif de stockage 6 est préférentiellement un dispositif de stockage électrochimique. Dans les modes de réalisation correspondants, le dispositif de stockage 6 comprend préférentiellement au moins une batterie au plomb. Préférentiellement, la batterie au plomb est une batterie étanche, par opposition à une batterie dite « ouverte ».

Le dispositif de stockage 6 présente une tension de stockage $U_{bat}$ et fournit un courant $i_{bat}$.

Le module de gestion 8 comprend un module de commande 10 selon l'invention et un dispositif d'affichage 12. Le module de gestion 8 comprend en outre trois branches connectées à un nœud N, chaque branche raccordant respectivement le dispositif de production 4, le dispositif de stockage 6 et les équipements 3 au module de gestion 8. La branche raccordant le module de gestion 8 au dispositif de production 4 et la branche raccordant le module de gestion 8 aux équipements 3 sont chacune pourvues d'un commutateur Kp, respectivement Ku. Les commutateurs sont adaptés pour sélectivement connecter ou déconnecter le dispositif de stockage 6 au dispositif de production 4, respectivement aux équipements 3, en particulier pour réguler l'énergie électrique fournie au dispositif de stockage 6 par le dispositif de production 4 et l'énergie électrique fournie aux équipements 3. Les commutateurs Kp et Ku sont par exemple des transistors à effet de champ à grille isolée connus sous le nom anglophone de MOSFET (« Métal Oxide Semiconductor Field Effect Transistor »).

Le module de commande 10 est configuré pour commander la charge et la décharge du dispositif de stockage 6 ainsi que l'alimentation des équipements 3 à partir de l'énergie électrique fournie par le dispositif de production 4 et de l'énergie électrique emmagasinée dans le dispositif de stockage 6. Pour ce faire, le module de commande 10 est connecté aux commutateurs Kp et Ku et est configuré pour en commander l'ouverture ou la fermeture pour connecter les organes de l'installation 2 entre eux, en particulier pour la régulation de la charge et de la décharge du dispositif de stockage 6. Comme illustré sur la Figure 1 et comme décrit plus en détail ci-après, cette commande est notamment effectuée en fonction du courant i fourni par le dispositif de production 4, de la tension $U_{bat}$ et du courant $i_{bat}$ fournis par le dispositif de stockage 6 et du courant $i_u$ fourni aux équipements 3. Les courants $i_{bat}$ et $i_u$ sont mesurés par des capteurs $c_{bat}$ et $c_u$ agencés sur la branche correspondante. Ces capteurs sont par exemple des shunts.

En particulier, le module de commande 10 est configuré pour appliquer au moins une consigne de régulation adaptée pour réguler l'énergie électrique fournie au dispositif de stockage 6 lorsque la tension aux bornes du dispositif de stockage 6 est supérieure à une valeur seuil prédéterminée. En pratique, cette consigne de régulation de charge vise à contrôler la tension aux bornes du dispositif de stockage 6. Par exemple, lorsque le dispositif de stockage 6 comprend des batteries au plomb étanches, ce contrôle a pour but de limiter la tension aux bornes de la batterie. Dans le cas de batteries au plomb ouvertes, ce contrôle peut également servir à brasser l'électrolyte qu'elles comprennent. Cette consigne de régulation est implémentée par la commande à l'ouverture et à la fermeture du commutateur Kp, par exemple par application d'une méthode de régulation par modulation de largeur d'impulsion, ou MLI. De manière connue, ce mécanisme de régulation de fin de charge vise à prévenir une surcharge excessive du dispositif de stockage 6, ce qui provoquerait également un phénomène de vieillissement prématuré du dispositif de stockage 6, par exemple du fait de mécanismes de corrosion et/ou de croissance des électrodes, ou encore d'assèchement de l'électrolyte. Le module de commande 10 présente ainsi un premier mode de fonctionnement dans lequel il n'applique pas de consigne de régulation, et un deuxième mode de fonctionnement dans lequel il applique au moins une consigne de régulation.

Dans le contexte de l'invention, le module de commande 10 est en outre configuré pour :

- évaluer une capacité C(t) de production de quantité d'électricité du dispositif de production 4 pour une période t donnée,
- déterminer une capacité de production pondérée Cp(t) à partir de ladite capacité de production évaluée C(t) et d'au moins une capacité C(t-i) de production de quantité d'électricité dudit dispositif de production évaluée sur une période t-i précédant ladite période donnée, et
- déterminer, pour une période t+1 postérieure à la période t donnée, une limite de décharge LimDech(t+1) du dispositif de stockage 4 en fonction de ladite capacité de production pondérée Cp(t).

Dans le contexte de l'invention, la limite de décharge est représentative d'un crédit d'électricité alloué à l'équipement de sortie déterminé sur la base de la capacité de production pondérée. Elle constitue donc une limite de décharge envisageable compte tenu de la situation du dispositif de production 4.

Elle ne correspond *a priori* pas à une limite qui, si elle se voit dépassée, induit nécessairement une dégradation du dispositif de stockage. En effet, le dispositif de production 4 n'est pas le seul élément susceptible d'influencer la quantité d'électricité disponible pour l'équipement de sortie, et l'historique du système lui-même peut intervenir en ce sens.

Ainsi, comme on le verra par la suite, sous certaines conditions, il peut être envisageable d'augmenter ce crédit d'une grandeur représentative du fait que le crédit alloué n'a pas été entièrement utilisé lors d'une période précédente, c'est-à-dire que la limite de décharge n'a pas été atteinte lors de cette période précédente.

Parallèlement, pour chaque période t, le module de commande 10 est également configuré pour évaluer :

- la quantité d'électricité E(t) produite par le dispositif 4 au cours de la période t considérée, et
- la quantité d'électricité $E_{conso}(t)$ consommée par les équipements 3 lors de la période t.

Dans le contexte de l'invention, la capacité de production, la capacité de production pondérée, la limité de décharge et les quantités E(t) et $E_{conso}(t)$ sont évaluées en quantité d'électricité (Ah).

Chaque période correspond préférentiellement sensiblement à une journée. L'instant de début de chaque nouvelle période t est déterminé en fonction d'un paramètre prédéterminé. Par exemple, le module de commande 10 est configuré pour initialiser une nouvelle période t en réponse à la détection de la valeur du courant i fourni par le dispositif de production 4 à une valeur inférieure à une valeur $i_0$ choisie pour être représentative de l'occurrence du crépuscule du soir. De fait, l'instant précis d'une nouvelle période peut varier légèrement dans le temps, et ce sans impact sur le principe de l'invention.

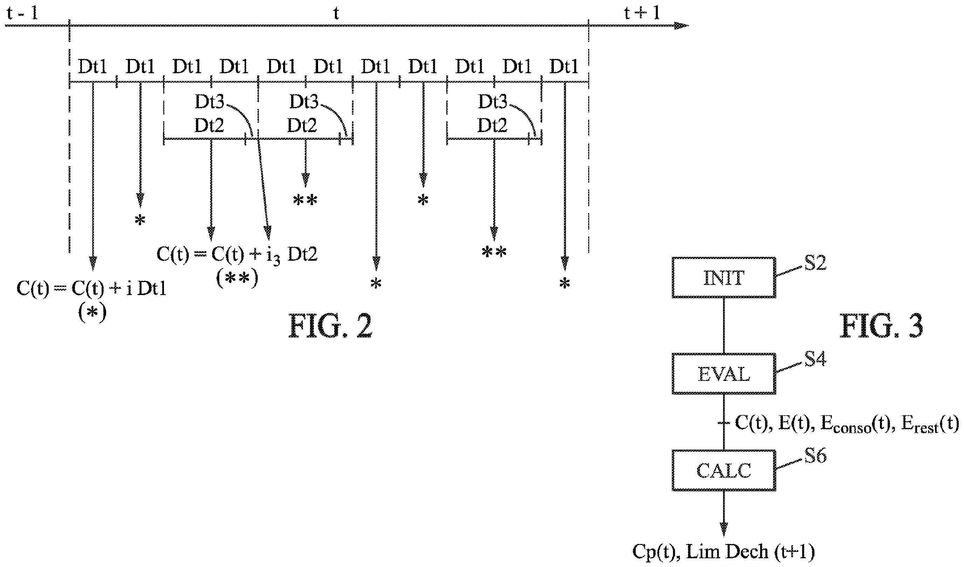

En référence à la Figure 2, chaque période t comprend une ou plusieurs premières périodes Dt1. Par exemple, les premières périodes Dt1 se succèdent sans interruption sur toute la durée d'une période t.

En outre, chaque période t comprend une ou plusieurs deuxièmes périodes Dt2 au cours desquelles le module de commande 10 fonctionne selon son deuxième mode de fonctionnement. Chaque deuxième période Dt2 est suivi d'une troisième période Dt3 au début de laquelle le module de commande bascule depuis le deuxième mode de fonctionnement vers le premier mode de fonctionnement. Une deuxième période Dt2 et la troisième période Dt3 associée sont consécutives. Chaque troisième période Dt3 est construite comme aménagement d'une deuxième période Dt2 visant à permettre la mesure du courant i qui serait fourni par le dispositif de production 4 si la régulation de charge opérée lors de cette deuxième période Dt2 n'était pas mise en œuvre. De manière pratique, chaque troisième période Dt3 peut être vue comme phase finale de la deuxième période Dt2 associée et au cours de laquelle la régulation de charge est interrompue.

Comme illustré sur la Figure 2, le module de commande 10 effectue un suivi parallèle des premières périodes Dt1 d'une part et des deuxièmes et troisièmes périodes Dt2, Dt3 d'autre part, de sorte qu'une première et une deuxième périodes Dtl, Dt2 peuvent se dérouler parallèlement. Ainsi, par exemple, la période t comprend au moins une première période Dt1 au cours de laquelle le module de commande 10 fonctionne selon le premier mode de fonctionnement, et au moins une première période Dt1 au cours laquelle le module de commande fonctionne selon le deuxième mode de fonctionnement.

La durée d'une première période Dt1 est par exemple comprise entre 1 et 10 secondes. La durée d'une deuxième période est comprise entre 30 secondes et 5 minutes. La durée d'une troisième période Dt3 est comprise entre $10^{-3}$ et 10 secondes, et vaut par exemple 3 secondes. A noter que la durée d'une troisième période Dt3 est faible voire négligeable devant la durée d'une deuxième période Dt2. Dans ce qui suit, Dti (i égal à 1, 2 ou 3) désigne aussi bien une période que la durée de cette période.

Préférentiellement, le début d'une deuxième période Dt2 correspond au début d'une première période Dt1.

Cette modélisation de chaque période t en premières, deuxièmes et troisièmes périodes Dtl, Dt2, Dt3 permet un suivi précis de plusieurs indicateurs relatifs à l'installation 2, comme on le verra par la suite.

Au début de chaque période t, le module de commande 10 initialise à zéro la capacité C(t), la quantité E(t) et la quantité $E_{conso}(t)$.

Au cours de chaque période t, le module de commande 10 est configuré pour :

- incrémenter la quantité d'électricité E(t) de la quantité i*Dt1 à l'issue de chaque première période Dtl; et

- incrémenter la quantité d'électricité $E_{conso}$ de la quantité $i_u$*Dt1 à l'issue de chaque première période Dt1.

L'incrémentation des quantités E(t) et $E_{conso}$ est opérée depuis le début de la période t jusqu'à la fin de la période t. L'évaluation des quantités E(t) et $E_{conso}$ est ainsi indépendante du mode de fonctionnement du module de commande 10.

En outre, le module de commande 10 est configuré pour :

- à l'issue de chaque période Dt1 au cours desquelles le module de commande 10 fonctionne selon le premier mode de fonctionnement, incrémenter la capacité C(t) de i*Dt1, et

- à l'issue de chaque période Dt3 suivant une deuxième période Dt2 au cours de laquelle le module de commande 10 fonctionne selon le deuxième mode de fonctionnement, incrémenter la capacité C(t) du produit entre la durée Dt2 et le courant i mesuré à la fin de la troisième période Dt3 qui suit la période Dt2 considérée. On notera ce courant $i_3$ dans ce qui suit.

Ce principe d'incrémentation est observé depuis le début de la période t jusqu'à la fin de période t, à l'issue de laquelle les valeurs de C(t), $E_{conso}(t)$ et E(t) sont enregistrées, par exemple dans une mémoire MEM du module de commande 10.

Le module de commande 10 est configuré pour évaluer la capacité pondérée Cp(t) de la période t considérée à partir de la capacité C(t) ainsi déterminée pour la période t, ainsi que d'une capacité C(t-i) évaluée pour une période précédant la période t.

Plus précisément, la capacité pondérée est alors évaluée à partir de la relation générale :

$$Cp(t) = \sum_{i=0}^{k} a_i(t)C(t-i), \text{(A)}$$

où $a_i(t)$ est un facteur de pondération non nul de la capacité C(t-i) mesurée pour la période t-i, et k correspond au nombre non nul de périodes (incluant la période t) pour lesquelles la capacité de production du dispositif de production 4 est prise en compte pour l'évaluation de la capacité de production pondérée de la période t. Ceci permet d'améliorer la finesse de l'évaluation de la capacité de production pondérée.

Chaque facteur de pondération $a_i(t)$ présente une valeur déterminée en fonction de critères comprenant par exemple l'éloignement de la période considérée à la période t et/ou l'écart entre la capacité C(t-i) obtenue et une valeur attendue pour cette capacité. Alternativement, les valeurs respectives des facteurs $a_i(t)$ sont prédéterminées et sont constantes d'une période à une autre.

Dans certains modes de réalisation, on a en outre la relation $\sum_{i=0}^{k} a_i(t) = 1$.

Préférentiellement, k est pris inférieur à 10, et de préférence inférieur à 5. Ceci permet de limiter la puissance de calcul nécessaire pour obtenir la capacité pondérée Cp(t).

Dans un mode de réalisation particulier, la capacité pondérée est évaluée de manière récursive à partir de la relation suivante:

$$Cp(t) = a(t) * C(t) + (1 - a(t)) * Cp(t-1), \text{(B)}$$

où a(t) est un facteur compris entre 0 et 1. La valeur de a(t) est prédéterminée en fonction de la période considérée, par exemple en fonction du nombre de périodes pris en considération. Dans certains modes de réalisation, a est pris constant d'une période à l'autre, et par exemple égal à 0,3.

La relation B permet de déterminer la capacité pondérée de manière à la fois précise et très simple. En effet, chaque nouvelle valeur de capacité pondérée Cp rend compte de l'ensemble des valeurs précédentes, et ne nécessite pour sa détermination que la seule valeur qu'elle présentait lors de la période précédente. L'espace mémoire requis pour l'évaluation de la capacité pondéré est donc à la fois faible et constant dans le temps alors que le nombre de périodes dont la capacité pondérée rend compte augmente.

A noter que cette relation B est un cas particulier de la relation A.

Le module de commande 10 est par ailleurs configuré pour évaluer la limite de décharge LimDech(t+1) de la période t+1 en tant que paramètre inférieur ou égal au rapport *Cp(t)/ c(t),* où Cp(t) est la capacité pondérée de la période t et *c(t)* est un coefficient de charge du dispositif de stockage.

Avantageusement, le module de commande est configuré pour évaluer la limite de décharge de la période suivante à partir de la relation :

$$LimDech(t+1) = Cp(t)/(c(t)*s(t)), (C)$$

où *s(t)* est un coefficient de sécurité supérieur ou égal à 1.

De manière connue, le coefficient de charge c(t) est défini comme le rapport entre la quantité d'énergie électrique à fournir à une batterie pour la recharger lorsqu'elle a fourni une quantité donnée d'énergie électrique, et cette quantité donnée d'énergie électrique fournie. Par exemple, pour une batterie étanche en bonne état, une charge complète n'est obtenue que pour un coefficient de charge c de l'ordre de 1,05. Aussi, dans le cadre de l'invention, c est par exemple pris constant et égal 1,05. Alternativement, le coefficient de charge c est déterminé à partir de critères tels que la quantité E(t) et/ou l'âge du dispositif de stockage 6.

Le coefficient de sécurité s permet d'introduire une marge de sécurité. Le coefficient s est par exemple pris constant et égal à 1,08.

Le module de commande 10 est par ailleurs configuré pour limiter la quantité d'électricité $E_{conso}$ fournie à l'équipement 3 lors d'une période en fonction de la limite de décharge LimDech déterminée pour cette période.

Avantageusement, le module de commande est configuré pour limiter la quantité d'électricité $E_{conso}$ fournie à l'équipement 3 précisément à la valeur LimDech.

En notant $E_{rest}(t)$ la quantité d'électricité définie par la relation :

$$E_{rest}(t) = LimDech(t) - E_{conso}(t),$$

le module de commande 10 est ainsi avantageusement configuré pour limiter, lors de la période correspondante, la quantité Erest à une valeur égale à 0.

Par exemple, le module de commande 10 est ainsi configuré pour couper l'alimentation lorsque la grandeur $E_{rest}$ atteint une valeur égale à 0. Par exemple, cette valeur est déterminée comme atteinte lorsque le rapport $100E_{rest}(t)/LimDech(t)$ passe à 0%.

Par « limiter à », on entend que la limite envisagée, ici LimDech, constitue une valeur maximale qui n'est pas dépassée. En revanche, la quantité d'électricité fournie à l'équipement de sortie est bien entendu susceptible de prendre n'importe quelle valeur entre 0 et cette limite, la valeur effectivement prise dépendant des besoins d'électricité de l'équipement de sortie lors de la période correspondante.

Par ailleurs, le module de commande 10 est en outre configuré pour déterminer de manière régulière et commander l'affichage au dispositif d'affichage 12 de la quantité d'électricité $E_{rest}$ restante pour la période en cours avant atteinte ou dépassement de la limite de décharge LimDech correspondante.

Cette quantité $E_{rest}(t)$ est affichée directement sous cette forme, ou bien indirectement par exemple sous la forme :

- $100E_{rest}(t)/LimDech(t)$, auquel cas la grandeur exprimée est un pourcentage,
- $V_{carac}*E_{rest}(t)$, où $V_{carac}$ est une tension exprimée en Volts qui est caractéristique de la tension du dispositif de stockage 6 en décharge (par exemple 12 V), auquel cas la grandeur affichée est une quantité d'énergie électrique en Wh.

A noter que la transposition de la quantité d'électricité $E_{rest}(t)$ en énergie électrique (sous la forme $V_{carac}*E_{rest}(t)$) est immédiate du fait que la tension en décharge du dispositif de stockage varie peu dans la gamme de courant pratiquée et que le rendement faradique (en courant) est proche de l'unité, c'est-à-dire de 100%. Toutefois, ceci n'est pas le cas en charge, lors de laquelle les écarts de tension peuvent dépasser 20% et le rendement faradique, proche de 98% pendant la majeure partie de la charge, diminue en fin de charge et tend vers zéro pour une batterie complètement chargée. Aussi, la transposition de la capacité de production de quantité d'électricité C(t) en termes d'énergie électrique est moins aisément réalisable.

Un procédé de gestion de l'installation 2 selon l'invention va maintenant être décrit en référence à la Figure 3.

Initialement, lors d'une étape S2 démarrant avec une nouvelle période t, la mémoire MEM du module de commande 10 contient une ou plusieurs capacités de production Cp associées aux périodes précédentes (notamment selon que la relation A ou B est utilisée), ainsi que la limite de décharge LimDech(t) calculée à l'issue de la période t-1 pour la période t. En outre, les grandeurs C(t), E(t) et $E_{conso}$(t) sont initialisées à la valeur zéro.

Lors d'une étape d'évaluation S4 prenant fin à la fin de la période t, le module de commande 10 incrémente de manière itérative la capacité de production C(t), ainsi que les quantités $E_{conso}$(t) et E(t) comme décrit ci-dessus.

Lors d'une étape S6 se déroulant à la fin de la période t, le module de commande 10 détermine la capacité de production pondérée Cp(t) pour la période t comme décrit ci-dessus en référence à la relation A ou B, puis détermine la limite de décharge LimDech(t+1) pour la période t+1 à venir à partir de la capacité pondérée Cp(t), comme décrit en référence à la relation C.

Parallèlement à ces étapes, le module de commande 10 régule la quantité d'électricité $E_{conso}$(t) fournie aux équipements 3 en fonction de la limite de décharge LimDech(t). Par exemple, il limite cette quantité à la limite de décharge LimDech(t). Par ailleurs, le module de commande 10 détermine la quantité $E_{rest}$(t) de manière régulière et en commande l'affichage au dispositif d'affichage 12, comme décrit ci-dessus.

Le principe de gestion de l'installation selon l'invention permet de limiter la décharge du dispositif de stockage en s'appuyant sur l'évaluation d'une capacité de production du dispositif de production 4 consolidée pour tenir compte de l'évolution de cette capacité au cours du temps. Ceci permet notamment de ne pas adosser la limite de décharge du dispositif de stockage à des capacités de production qu'on pourrait observer mais qui pourraient ne pas être représentatives de la quantité d'énergie électrique productible de manière fiable par le dispositif de production 4, par exemple dans le cas d'un fort ensoleillement atypique de la saison courante lorsque le dispositif de production 4 comprend des équipements photovoltaïques. Ainsi, l'invention permet de limiter les périodes de fonctionnement du dispositif de stockage 6 en dehors de son enveloppe de fonctionnement optimale, en particulier dans des conditions de décharge durable qui favorisent le vieillissement prématuré du dispositif de stockage 6.

En outre, la détermination de cette limite de décharge est à la fois simple et fiable, et peut en particulier être réalisée de façon simple alors même que le module de commande 10 est dans le second mode de fonctionnement par lequel il régule la charge du dispositif de stockage 6.

L'invention vise également un programme informatique comportant des instructions pour la mise en œuvre du procédé décrit ci-dessus, lorsque ce programme est exécuté par un processeur.

D'autres modes de réalisation sont envisageables. En particulier, la réinitialisation des grandeurs évaluées pour chaque période est réalisable à un instant autre que celui du début de nouvelle période t. Par exemple, l'instant de réinitialisation est choisi postérieur de plusieurs heures au début d'une nouvelle période, mais demeure antérieur au lever du soleil.

En outre, dans certaines réalisations, le module de commande 10 est configuré pour limiter, lors de la période t, la quantité d'électricité $E_{conso}$ à la somme de la limite de décharge LimDech(t) et d'une grandeur notée B(t) représentative de la différence entre la limite de décharge LimDech(t-i) lors d'au moins une période antérieure t-i et la quantité d'électricité $E_{conso}$(t-i) fournie à l'équipement de sortie à l'issue de cette période antérieure t-i.

En d'autres termes, la grandeur B(t) est représentative du fait que la grandeur $E_{rest}$(t-i)= LimDech(t-i) - $E_{conso}$(t-i) était, à la fin de la période t-i, strictement positive.

Cette réalisation permet d'affiner la régulation du dispositif de stockage pour tenir compte de la non-consommation par l'équipement de sortie de la totalité de l'électricité disponible pour lui lors de la période t-i en question, et donc de l'existence d'un surplus d'électricité vis-à-vis du cas limite de consommation de l'intégralité de l'électricité disponible par l'équipement de sortie.

La grandeur B(t) est par exemple déterminée à partir de la relation générale :

$$B(t) = \sum_{i=1}^{k} b_i(t)\, E_{rest,fin}(t-i)$$

où $E_{rest,fin}$(t- i) désigne la valeur de la grandeur $E_{rest}$ à l'issue de la période t-i, $b_i$(t) est un facteur de pondération de la grandeur $E_{rest,fin}$(t - i), et k est l'horizon correspondant au nombre de périodes pour lesquelles la valeur de la grandeur $E_{rest,fin}$(t - i) est prise en compte pour l'évaluation de la grandeur B(t).

L'horizon k est avantageusement choisi pour limiter la complexité du traitement des données requis. Par exemple, il est pris inférieur ou égal à 3.

En outre, chaque facteur de pondération $b_i$(t) présente par exemple une valeur déterminée en fonction de critères comprenant par exemple l'éloignement de la période considérée à la période t.

Avantageusement, les facteurs de pondération $b_i(t)$ sont choisis décroissants en fonction de i et de sorte que la contribution cumulée d'une valeur $E_{rest,fin}$ non nulle lors d'une période donnée à la grandeur B(t) sur l'horizon k (considéré comme démarrant avec la période suivante) corresponde à un pourcentage prédéterminé noté p de cette valeur $E_{rest,fin}$.

Autrement dit, en prenant l'horizon k égal à 3, si lors de la période t, la valeur $E_{rest,fin}(t)$ est non nulle, cet évènement se traduit par la relation :

$$[B(t+1) + B(t+2) + B(t+3)] - [B'(t+1) + B'(t+2) + B(t+3)] = p*E_{rest,fin}(t),$$

où B'(t+1) désigne la grandeur B(t+1) qui aurait été obtenue si $E_{rest,fin}(t)$ avait été nul.

Le pourcentage p est par exemple strictement inférieur à 100%. Il est par exemple pris égal à 50%.

Ce mode de réalisation est compatible avec le mode de réalisation précédemment décrit. En effet, lorsqu'à l'issue d'une période donnée, la quantité $E_{rest,fin}$ est nulle, la limite de décharge pour la période postérieure correspond alors à celle déterminée dans le cadre du mode de réalisation précédemment décrit.

Aussi, pour une période donnée, la limite de décharge peut correspondre à la limite de décharge déterminée via le premier mode de réalisation, c'est-à-dire avec la grandeur B nulle, et pour la période consécutive, à celle déterminée selon le mode de réalisation ci-dessus.

Autrement dit, le premier mode de réalisation correspond à un cas particulier du deuxième mode de réalisation dans lequel la grandeur B est nulle.

## Revendications

**1.** Procédé de gestion d'une installation (2) de production d'énergie électrique comprenant :

- un dispositif de production (4) d'énergie électrique,
- un dispositif de stockage (6) d'énergie électrique adapté pour stocker l'énergie électrique produite par le dispositif de production d'énergie électrique et pour fournir de l'énergie électrique à un équipement (3) connecté en sortie de ladite installation,
- un module de commande (10) configuré pour piloter la charge et la décharge du dispositif de stockage (6),

le procédé comprenant les étapes de:

- évaluer une capacité de production (C(t)) de quantité d'électricité du dispositif de production pour une période (t) donnée,
- déterminer une capacité de production pondérée (Cp(t)) à partir de ladite capacité de production (C(t)) de quantité d'électricité évaluée et d'au moins une capacité de production de quantité d'électricité dudit dispositif de production (C(t-i)) évaluée sur une période précédant ladite période donnée,
- déterminer, pour une période postérieure à la période donnée, une limite de décharge (LimDech(t+1)) du dispositif de stockage en fonction de ladite capacité de production pondérée (Cp(t)), et
- au cours de la période postérieure (t+1), limiter la quantité d'électricité ($E_{conso}(t+1)$) fournie à l'équipement connecté en sortie en fonction de la limite de décharge (LimDech(t+1)).

**2.** Procédé selon la revendication 1, dans lequel, au cours de la période postérieure (t+1), on limite la quantité d'électricité ($E_{conso}(t+1)$) fournie à l'équipement connecté en sortie à la valeur de la limite de décharge (LimDech(t+1)) déterminée pour cette période postérieure.

**3.** Procédé selon la revendication 1, dans lequel, au cours de la période postérieure (t+1), on limite la quantité d'électricité ($E_{conso}(t+1)$) fournie à l'équipement connecté en sortie à la somme de la limite de décharge (LimDech(t+1)) déterminée pour cette période postérieure et d'une grandeur (B(t)) représentative de la différence entre la limite de décharge (LimDech(t-i)) lors d'au moins une période antérieure (t-i) à ladite période postérieure et la quantité d'électricité fournie à l'équipement connecté en sortie à l'issue de cette période antérieure.

**4.** Procédé selon l'une quelconque des revendications précédentes, dans lequel, lors de ladite période postérieure (t+1), on commande l'affichage à un dispositif d'affichage (12) d'une quantité d'électricité restante ($E_{rest}(t+1)$) pour

la période postérieure, ladite quantité d'électricité restante étant déterminée à partir de la différence entre ladite limite de décharge (LimDech(t+1)) et la quantité d'électricité ($E_{conso}$(t+1)) fournie à l'équipement connecté en sortie de l'installation au cours de la période postérieure (t+1).

5. Procédé selon l'une quelconque des revendications précédentes, dans lequel la période donnée (t) comprend au moins une première période (Dt1) au cours de laquelle le module de commande (10) fonctionne selon un premier mode de fonctionnement dans lequel le module de commande (10) n'applique pas de consigne de régulation adaptée pour réguler l'énergie électrique produite par le dispositif de production (4) et fournie au dispositif de stockage (6), et au moins une deuxième période (Dt2) au cours de laquelle le module de commande (10) fonctionne selon un deuxième mode de fonctionnement dans lequel le module de commande (10) applique au moins une consigne de régulation de charge.

6. Procédé selon la revendication 5, dans lequel on évalue la capacité de production (C(t)) de quantité d'électricité de la période donnée (t) à partir :

- du courant (i) fourni par le dispositif de production (4) lors d'au moins une première période et de la durée de l'au moins une première période, et
- de la durée d'au moins une deuxième période (Dt2) et, pour chaque deuxième période (Dt2) considérée, du courant ($i_3$) fourni par le dispositif de production (4) lors d'une troisième période (Dt3) consécutive à ladite deuxième période (Dt2) considérée et au cours de laquelle le module de commande (10) fonctionne selon le premier mode de fonctionnement.

7. Procédé selon la revendication 6, **caractérisée en ce que** la durée d'une troisième période (Dt3) est comprise entre $10^{-3}$ et 10 secondes.

8. Procédé selon l'une quelconque des revendications précédentes, dans lequel la capacité de production pondérée (Cp(t)) pour la période donnée (t) est déterminée à partir de la relation :

$$Cp(t) = \sum_{i=0}^{k} a_i(t)C(t-i)$$

où $Cp$ désigne la capacité de production pondérée, $t$ désigne la période donnée, $t-i$ désigne une période antérieure à la période donnée, $C(t-i)$ désigne la capacité de production au cours de la période t-i, k désigne un nombre non nul de périodes incluant la période t dont la capacité de production du dispositif de production (4) est prise en compte pour l'évaluation de la capacité de production pondérée (Cp(t)) de la période donnée et $a_i(t)$ désigne un facteur de pondération non nul de la capacité de production $C(t-i)$ de la période t-i.

9. Procédé selon la revendication 8, **caractérisé en ce que** la capacité pondérée est évaluée à partir de la relation:

$$Cp(t) = a(t) * C(t) + (1 - a(t)) * Cp(t-1),$$

où a(t) est un facteur compris entre 0 et 1.

10. Procédé selon l'une quelconque des revendications précédentes, dans lequel la limite de décharge (LimDech(t+1)) de la période postérieure est déterminée comme inférieure ou égale au rapport $Cp(t)/c(t)$, où $t$ désigne la période donnée, Cp(t) est la capacité de production pondérée de la période donnée (t) et $c(t)$ est un coefficient de charge du dispositif de stockage pour la période donnée (t).

11. Procédé selon la revendication 10, dans lequel la limite de décharge (LimDech(t+1)) est déterminée à partir de la relation :

$$LimDech(t+1) = Cp(t)/(c(t) * s(t)),$$

où $LimDech$ est la limite de décharge, t+1 désigne la période postérieure à la période donnée et $s(t)$ est un coefficient de sécurité pour la période donnée (t) qui est supérieur ou égal à 1.

**12.** Programme informatique comportant des instructions pour la mise en œuvre du procédé selon l'une des revendications précédentes, lorsque ce programme est exécuté par un processeur.

**13.** Module de commande pour installation de production d'énergie électrique (2), ladite installation de production d'énergie électrique (2) comprenant :

- un dispositif de production (4) d'énergie électrique,
- un dispositif de stockage (6) d'énergie électrique adapté pour stocker l'énergie électrique produite par le dispositif de production (4) d'énergie électrique et pour fournir de l'énergie électrique à un équipement (3) connecté en sortie de ladite installation (2),
- le module de commande (10) étant configuré pour piloter la charge et la décharge du dispositif de stockage (6),

**caractérisé en ce que** le module de commande (10) est en outre configuré pour:

- évaluer une capacité de production (C(t)) de quantité d'électricité du dispositif de production (4) pour une période donnée (t),
- déterminer une capacité de production pondérée (Cp(t)) à partir de ladite capacité de production (C(t)) de quantité d'électricité et d'au moins une capacité de production (C(t-i)) de quantité d'électricité évaluée sur une période (t-i) précédant ladite période donnée (t),
- déterminer, pour une période postérieure (t+1) à la période donnée (t), une limite de décharge (LimDech(t+1)) du dispositif de stockage (6) en fonction de ladite capacité de production pondérée (Cp(t)), et
- limiter, au cours de la période postérieure (t+1), la quantité d'électricité ($E_{conso}$(t+1)) fournie à l'équipement connecté en sortie en fonction de la limite de décharge (LimDech(t+1)).

**14.** Installation de production d'énergie électrique, ladite installation de production d'énergie électrique (2) comprenant :

- un dispositif de production (4) d'énergie électrique,
- un dispositif de stockage (6) d'énergie électrique adapté pour stocker l'énergie électrique produite par le dispositif de production (4) d'énergie électrique et pour fournir de l'énergie électrique à un équipement connecté en sortie de ladite installation (2),

**caractérisée en ce qu'**elle comprend un module de commande (10) selon la revendication 13.

**15.** Installation de production d'énergie électrique selon la revendication 14, **caractérisée en ce que** le dispositif de production (4) comprend un ou plusieurs panneaux photovoltaïques.

**16.** Installation de production d'énergie électrique selon la revendication 14 ou 15, **caractérisée en ce que** le dispositif de stockage (6) comprend une ou plusieurs batteries au plomb.

**Patentansprüche**

**1.** Verfahren zur Verwaltung einer Stromerzeugungsanlage (2), umfassend:

- eine Vorrichtung (4) zur Stromerzeugung,
- eine Vorrichtung (6) zur Stromspeicherung, die geeignet ist, den von der Stromerzeugungsvorrichtung erzeugten Strom zu speichern und den Strom an eine Ausrüstung (3) zu liefern, die am Ausgang der Anlage angeschlossen ist,
- ein Steuermodul (10), das ausgelegt ist, die Ladung und Entladung der Speichervorrichtung (6) zu steuern,

wobei das Verfahren die Schritte umfasst:

- Evaluieren einer Produktionskapazität (C(t)) der Strommenge der Erzeugungsvorrichtung für einen gegebenen Zeitraum(t),
- Bestimmen einer gewichteten Produktionskapazität (Cp(t)) aus der Produktionskapazität (C(t)) der evaluierten Strommenge und mindestens einer Produktionskapazität der Strommenge der Erzeugungsvorrichtung (C(t-i)), die über einen Zeitraum vor dem gegebenen Zeitraum evaluiert wird,
- Bestimmen einer Entladungsgrenze (LimDech(t+1)) der Speichervorrichtung für einen Zeitraum nach dem gegebenen Zeitraum als Funktion der gewichteten Produktionskapazität (Cp(t)), und
- während des nachfolgenden Zeitraums (t+1), Begrenzen der Strommenge ($E_{conso}$(t+1)), die an die am Ausgang angeschlossene Ausrüstung geliefert wird, als Funktion der Entladungsgrenze (LimDech(t+1)).

2. Verfahren nach Anspruch 1, wobei, während des nachfolgenden Zeitraums (t+1), die Strommenge ($E_{conso}$(t+1)), die an die am Ausgang angeschlossene Ausrüstung geliefert wird, auf den Wert der Entladungsgrenze (LimDech(t+1)) begrenzt wird, der für diesen nachfolgenden Zeitraum bestimmt wird.

3. Verfahren nach Anspruch 1, wobei, während des nachfolgenden Zeitraums (t+1), die Strommenge ($E_{conso}$(t+1)), die an die am Ausgang angeschlossene Ausrüstung geliefert wird, begrenzt wird auf die Summe der Entladungsgrenze (LimDech(t+1)), die für diesen nachfolgenden Zeitraum bestimmt wird, und einer Größe (B(t)), die für die Differenz zwischen der Entladungsgrenze (LimDech(t-i)) während mindestens einem Zeitraum (t-i) vor dem nachfolgenden Zeitraum und der Strommenge, die an die am Ausgang angeschlossene Ausrüstung am Ende dieses vorhergehenden Zeitraums geliefert wird, repräsentativ ist.

4. Verfahren nach einem der vorhergehenden Ansprüche, wobei, während des nachfolgenden Zeitraums (t+1), das Anzeigen einer Reststrommenge ($E_{rest}$(t+1)) für den nachfolgenden Zeitraum auf einer Anzeigevorrichtung (12) angewiesen wird, wobei die Reststrommenge aus der Differenz zwischen der Entladungsgrenze (LimDech(t+1)) und der Strommenge ($E_{conso}$(t+1)), die an die am Ausgang der Anlage angeschlossene Ausrüstung während des nachfolgenden Zeitraums (t+1) geliefert wird, bestimmt wird.

5. Verfahren nach einem der vorhergehenden Ansprüche, wobei der gegebene Zeitraum (t) umfasst: mindestens einen ersten Zeitraum (Dt1), während der das Steuermodul (10) gemäß einem ersten Betriebsmodus betrieben wird, wobei das Steuermodul (10) keinen Regel-Sollwert anlegt, der geeignet ist, den Strom zu regeln, der von der Erzeugungsvorrichtung (4) erzeugt wird und an die Speichervorrichtung (6) geliefert wird, und mindestens einen zweiten Zeitraum (Dt2), während der das Steuermodul (10) gemäß einem zweiten Betriebsmodus betrieben wird, in dem das Steuermodul (10) mindestens einen Ladungsregel-Sollwert anlegt.

6. Verfahren nach Anspruch 5, wobei die Produktionskapazität (C(t)) der Strommenge in dem gegebenen Zeitraum (t) evaluiert wird aus:

   - dem Strom (i), der von der Erzeugungsvorrichtung (4) während mindestens eines ersten Zeitraums geliefert wird, und der Dauer mindestens eines ersten Zeitraums, und
   - der Dauer mindestens eines zweiten Zeitraums (Dt2) und, für jeden berücksichtigten zweiten Zeitraum (Dt2), dem Strom ($i_3$), der von der Erzeugungsvorrichtung (4) während eines dritten Zeitraums (Dt3) konsekutiv auf den berücksichtigten zweiten Zeitraum (Dt2) geliefert wird, und während der das Steuermodul (10) gemäß dem ersten Betriebsmodus betrieben wird.

7. Verfahren nach Anspruch 6, **dadurch gekennzeichnet, dass** die Dauer eines dritten Zeitraums (Dt3) zwischen $10^{-3}$ und 10 Sekunden beträgt.

8. Verfahren nach einem der vorhergehenden Ansprüche, wobei die gewichtete Produktionskapazität (Cp(t)) für den gegebenen Zeitraum (t) bestimmt wird aus der Beziehung:

$$\mathrm{Cp(t)} \;=\; \sum_{i=0}^{k} a_i(\mathrm{t})\,\mathrm{C(t-i)},$$

wobei Cp die gewichtete Produktionskapazität bezeichnet, t den gegebene Zeitraum bezeichnet, t-i einen Zeitraum vor dem gegebenen Zeitraum bezeichnet, C(t-i) die Produktionskapazität während des Zeitraums t-i bezeichnet, k eine Zahl ungleich Null bezeichnet, umfassend den Zeitraum t, deren Produktionskapazität der Erzeugungsvorrichtung (4) zur Evaluierung der gewichteten Produktionskapazität (Cp(t)) des gegebenen Zeitraums berücksichtigt wird, und $a_i$(t) einen Gewichtungsfaktor ungleich Null der Produktionskapazität C(t-i) des Zeitraums t-i bezeichnet.

9. Verfahren nach Anspruch 8, **dadurch gekennzeichnet, dass** die gewichtete Kapazität evaluiert wird aus der Beziehung:

$$Cp(t) = a(t) * C(t) + (1-a(t)) * Cp(t-1),$$

wobei a(t) ein Faktor zwischen 0 und 1 ist.

10. Verfahren nach einem der vorhergehenden Ansprüche,
wobei die Entladungsgrenze (LimDech(t+1)) des nachfolgenden Zeitraums bestimmt wird als kleiner oder gleich dem Verhältnis Cp(t)/c(t), wobei t den gegebenen Zeitraum bezeichnet, Cp(t) die gewichtete Produktionskapazität des gegebenen Zeitraums (t) ist, und c(t) ein Ladungskoeffizient der Speichervorrichtung für den gegebenen Zeitraum (t) ist.

11. Verfahren nach Anspruch 10, wobei die Entladungsgrenze (LimDech(t+1)) bestimmt wird aus der Beziehung:

$$LimDech(t+1) = Cp(t)/(c(t) * s(t)),$$

wobei LimDech die Entladungsgrenze ist, t+1 der Zeitraum nach dem gegebenen Zeitraum bezeichnet, und s(t) ein Sicherheitskoeffizient für den gegebenen Zeitraum (t) ist, der größer oder gleich 1 ist.

12. Computerprogramm, umfassend Instruktionen zur Durchführung des Verfahrens nach einem der vorhergehenden Ansprüche, wenn dieses Programm von einem Prozessor ausgeführt wird.

13. Steuermodul für eine Stromerzeugungsanlage (2), wobei die Stromerzeugungsanlage (2) umfasst:

- eine Vorrichtung (4) zur Stromerzeugung,
- eine Vorrichtung (6) zur Stromspeicherung, die geeignet ist, den von der Stromerzeugungsvorrichtung (4) erzeugten Strom zu speichern und den Strom an eine Ausrüstung (3) zu liefern, die am Ausgang der Anlage (2) angeschlossen ist,
- wobei das Steuermodul (10) ausgelegt ist, die Ladung und Entladung der Speichervorrichtung (6) zu steuern,

**dadurch gekennzeichnet, dass** das Steuermodul (10) außerdem ausgelegt ist zum:

- Evaluieren einer Produktionskapazität (C(t)) der Strommenge der Erzeugungsvorrichtung (4) für einen gegebenen Zeitraum (t),
- Bestimmen einer gewichteten Produktionskapazität (Cp(t)) aus der Produktionskapazität (C(t)) der Strommenge und mindestens einer Produktionskapazität (C(t-i)) der Strommenge, die über einen Zeitraum (t-i) vor dem gegebenen Zeitraum (t) evaluiert wird,
- Bestimmen einer Entladungsgrenze (LimDech(t+1)) der Speichervorrichtung (6) für einen Zeitraum (t+1) nach dem gegebenen Zeitraum (t), als Funktion der gewichteten Produktionskapazität (Cp(t)), und
- während des nachfolgenden Zeitraums (t+1), Begrenzen der Strommenge ($E_{conso}$(t+1)), die an die am Ausgang angeschlossene Ausrüstung geliefert wird, als Funktion der Entladungsgrenze (LimDech(t+1)).

14. Stromerzeugungsanlage, wobei die Stromerzeugungsanlage (2) umfasst:

- eine Vorrichtung (4) zur Stromerzeugung,
- eine Vorrichtung (6) zur Stromspeicherung, die geeignet ist, den von der Stromerzeugungsvorrichtung (4) erzeugten Strom zu speichern und den Strom an eine Ausrüstung zu liefern, die am Ausgang der Anlage (2) angeschlossen ist,

**dadurch gekennzeichnet, dass** diese ein Steuermodul (10) nach Anspruch 13 umfasst.

15. Stromerzeugungsanlage nach Anspruch 14, **dadurch gekennzeichnet, dass** die Erzeugungsvorrichtung (4) ein oder mehrere Photovoltaikpaneele umfasst.

16. Stromerzeugungsanlage nach Anspruch 14 oder 15, **dadurch gekennzeichnet, dass** die Speichervorrichtung (6) eine oder mehrere Bleibatterien umfasst.

**Claims**

1. Method for managing an electrical energy generation facility (2) comprising:

   - an electrical energy generation device (4),
   - an electrical energy storage device (6) adapted for storing electrical energy generated by the electrical energy generation device and for outputting electrical energy to equipment (3) connected to said facility,
   - a control module (10) configured for controlling the charging and discharging of the storage device (6),

   the method comprising the steps of:

   - evaluating an electricity generation capacity (C(t)) of the generation device for a given period (t),
   - determining a weighted generation capacity (Cp(t)) on the basis of said evaluated electricity generation capacity (C(t)) and at least one electricity generation capacity of said generating device (C(t)) evaluated over a period prior to said given period,
   - determining, for a period subsequent to the given period, a discharge limit (LimDech(t+1)) of the storage device on the basis of said weighted generation capacity (Cp(t)), and
   - during the subsequent period (t+1), limiting the amount of electricity ($E_{conso}$(t+1)) output to the connected equipment on the basis of the discharge limit (LimDech(t+1)).

2. Method according to claim 1, wherein, during the subsequent period (t+1), the amount of electricity ($E_{conso}$(t+1)) output to the connected equipment is limited to the value of the discharge limit (LimDech(t+1)) determined for said subsequent period.

3. Method according to claim 1, wherein, during the subsequent period (t+1), the amount of electricity ($E_{conso}$(t+1)) output to the connected equipment is limited to the sum of the discharge limit (LimDech(t+1)) determined for said subsequent period and a value (B(t)) representative of the difference between the discharge limit (LimDech(t-i)) during at least one period (t-i) prior to said subsequent period and the amount of electricity output to the connected equipment at the end of said prior period.

4. Method according to any preceding claim, wherein, during said subsequent period (t+1), a display device (12) is controlled to display an amount of electricity ($E_{rest}$(t+1)) remaining for the subsequent period, said amount of remaining electricity being determined from the difference between said discharge limit (LimDech(t+1)) and the amount of electricity ($E_{conso}$(t+1)) output to the equipment connected to the facility during the subsequent period (t+1).

5. Method according to any preceding claim, wherein the given period (t) comprises at least a first period (Dt1) during which the control module (10) operates in a first mode of operation in which the control module (10) does not apply control settings adapted for regulating the electrical energy generated by the generation device (4) and supplied to the storage device (6), and at least a second period (Dt2) during which the control module (10) operates in a second mode of operation in which the control module (10) applies at least one charge control setting.

6. Method according to claim 5, wherein the electricity generation capacity (C(t)) for the given period (t) is evaluated on the basis of:

   - the current (i) supplied by the generation device (4) during at least one first period, and the duration of the at least one first period, and
   - the duration of at least one second period (Dt2), and, for each second period (Dt2) considered, the current ($i_3$) supplied by the generation device (4) during a third period (Dt3) following said second period (Dt2) considered and during which the control module (10) operates in the first mode of operation.

7. Method according to claim 6, wherein the duration of a third period (Dt3) is between $10^{-3}$ and 10 seconds.

8. Method according to any preceding claim, wherein the weighted generation capacity (Cp(t)) for the given period (t) is determined from the relation:

$$Cp(t) = \sum_{i=0}^{k} a_i(t)C(t-i)$$

where $Cp$ is the weighted generation capacity, $t$ is the given period, $t-i$ is a period prior to the given period, $C(t-i)$ is the generation capacity during period t-i, k is a nonzero number of periods including period t for which the generation capacity of the generation device (4) is taken into account when evaluating the weighted generation capacity (Cp(t)) for the given period, and $a_i(t)$ denotes a non-zero weighting factor for the generation capacity $C(t-i)$ of period t-i.

9. Method according to claim 8, wherein the weighted capacity is evaluated from the relation:

$$Cp(t) = a(t) * C(t) + (1 - a(t)) * Cp(t - 1),$$

where a(t) is a factor between 0 and 1.

10. Method according to any preceding claim, wherein the discharge limit (LimDech(t+1)) of the subsequent period is determined to be less or equal to the ratio $Cp(t)/c(t),$ where $t$ is the given period, Cp(t) is the weighted generation capacity for the given period (t), and $c(t)$ is a charge coefficient of the storage device for the given period (t).

11. Method according to claim 10, wherein the discharge limit (LimDech(t+1)) is determined from the relation:

$$LimDech(t + 1) = Cp(t)/(c(t) * s(t)),$$

where LimDech is the discharge limit, t+1 denotes the period subsequent to the given period, and $s(t)$ is a safety coefficient for the given period (t) which is greater than or equal to 1.

12. Computer program comprising instructions for implementing the method according to one of the preceding claims, when the program is executed by a processor.

13. Control module for an electrical energy generation facility (2), said electrical energy generation facility (2) comprising:

- an electrical energy generation device (4),
- an electrical energy storage device (6) adapted for storing electrical energy generated by the electrical energy generation device (4) and for outputting electrical energy to equipment (3) connected to said facility (2),
- the control module (10) being configured for controlling the charging and discharging of the storage device (6),

**characterized in that** the control module (10) is further configured for:

- evaluating an electricity generation capacity (C(t)) of the generation device (4) for a given period (t),
- determining a weighted generation capacity (Cp(t)) on the basis of said electricity generation capacity (C(t)) and at least one electricity generation capacity (C(t)) evaluated over a period (t) prior to said given period (t),
- determining, for a period (t+1) subsequent to the given period (t), a discharge limit (LimDech(t+1)) of the storage device (6) on the basis of said weighted generation capacity (Cp(t)), and
- during the subsequent period (t+1), limiting the amount of electricity ($E_{conso}$(t+1)) output to the connected equipment on the basis of the discharge limit (LimDech(t+1)).

14. Electrical energy generation facility, said electrical energy generation facility (2) comprising:

- an electrical energy generation device (4),
- an electrical energy storage device (6) adapted for storing electrical energy generated by the electrical energy generation device (4) and for outputting electrical energy to equipment connected to said facility (2),

**characterized in that** the facility comprises a control module (10) according to claim 13.

15. Electrical energy generation facility according to claim 14, wherein the generation device (4) comprises one or more photovoltaic panels.

16. Electrical energy generation facility according to claim 14 or 15, wherein the storage device (6) comprises one or more lead-acid batteries.

FIG. 1

FIG. 2

FIG. 3

EP 3 189 577 B1

**EP 3 189 577 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013128731 A